# EUROPEAN PATENT SPECIFICATION

(11) **EP 4 639 816 B1**
(45) Date of publication and mention of the grant of the patent: **30.09.2026**
(21) Application number: 23828452.5
(22) Date of filing: 15.12.2023
(51) Int. Cl.: H04K 3/00, G06N 3/08, G06N 20/00

(54) **WAVEFORM GENERATION**
WELLENFORMERZEUGUNG
GÉNÉRATION DE FORME D'ONDE

(30) Priority: 22.12.2022 GB 202219550
(43) Date of publication of application: 29.10.2025
(73) Proprietor: BAE SYSTEMS plc, London SW1Y 5AD (GB)
(72) Inventor: HARRISON, Richard, Ross-on-Wye Hereford and Worcester HR9 5PB (GB); HILL, Paul, Ross-on-Wye Hereford and Worcester HR9 5PB (GB); PARKINSON, John, Ross-on-Wye Hereford and Worcester HR9 5PB (GB)
(74) Representative: BAE SYSTEMS plc Group IP Department
(86) International application number: PCT/GB2023/053263
(87) International publication number: WO 2024/134159

(56) References cited:
- WO-A1-2018/212704
- US-A1- 2011 086 614
- YUAN JIANQUAN ET AL: "Refined recognition and intelligent smart interference of radar signal", 2019 IEEE INTERNATIONAL CONFERENCE ON UNMANNED SYSTEMS (ICUS), IEEE, 17 October 2019 (2019-10-17), pages 616 - 622, XP033710700, DOI: 10.1109/ICUS48101.2019.8995952
- NICHOLAS R OSNER ET AL: "Threat evaluation and jamming allocation", IET RADAR SONAR NAVIGATION, THE INSTITUTION OF ENGINEERING AND TECHNOLOGY, UK, vol. 11, no. 3, March 2017 (2017-03-01), pages 459 - 465, XP006110433, ISSN: 1751-8784, DOI: 10.1049/IET-RSN.2016.0277
- HAN LU ET AL: "Ground threat evaluation and jamming allocation model with Markov chain for aircraft", IET RADAR SONAR NAVIGATION, THE INSTITUTION OF ENGINEERING AND TECHNOLOGY, UK, vol. 14, no. 7, July 2020 (2020-07-01), pages 1039 - 1045, XP006090932, ISSN: 1751-8784, DOI: 10.1049/IET-RSN.2019.0433

## Description

The present disclosure relates to a method of training a machine learning model, to the corresponding trained model and to a method of determining a waveform of a signal, wherein the method uses said trained model. In particular, the present application relates to such model and methods in the context of generating signals for jamming target devices.

In the field of telecommunications, communication devices are able to transmit and receive signals in a variety of frequency 'bands'. Some frequency bands may also be used for purposes other than telecommunications. An example of such a band is the 'industrial, scientific, and medical' (ISM) radio band. This band is commonly used for devices which emit radio frequencies that are not used for telecommunications (e.g. microwave ovens). The ISM band is also used for some telecommunications purposes, such as Bluetooth communications, near-field communications (NFC), and wireless computer networks (e.g. WiFi).

In some applications, it can be beneficial to prevent communication devices from transmitting and/or receiving in the bands in which they operate. For example, private organisations may wish to prevent the use of certain communication devices in a given location, such as on their private premises where persons have given their consent for the prevention to take place and where it is legal to do so. Such applications may include: a cinema that wishes to prevent customers from using wireless communication during film screenings; schools that wish to prevent students from using wireless communication during school time; and businesses that wish to prevent employees from using wireless communication while at work (e.g. to preserve confidentiality requirements).

However, this prevention of the use of communication devices (sometimes referred to as 'jamming') is a complex task. The jamming of communication devices requires the generation of a waveform that defines a jamming signal. The waveform may need to be tailored to the specific device that is intended to be jammed (referred to herein as a 'target device'). The generation of this waveform requires detailed analysis and computation that takes into account the operating characteristics of the specific target device. In an environment with many different target devices (e.g. cinemas, schools, and business premises), this task of generating a waveform can result in an intractable number of calculations. Conventionally, this may lead to the waveform being generated based on acquired knowledge and instinct of a technical expert. This may lead to inconsistent results and reduced efficiency. Such a technique of generating a waveform is also slow and not capable of responding in real time to changes in the target devices present. This is particularly disadvantageous in settings with a high turnover of target devices (e.g. cinemas, schools, and business premises).

A solution based on machine learning is disclosed in the following document: YUAN JIANQUAN ET AL: "Refined recognition and intelligent smart interference of radar signal",2019 IEEE INTERNATIONAL CONFERENCE ON UNMANNED SYSTEMS (ICUS), IEEE, 17 October 2019 (2019-10-17), pages 616-622, XP033710700,DOI: 10.1109/ICUS48101.2019.8995952.

However, there is a need to provide a method for generating a signal that is effective to jam a combination of target devices, whereby the method is more consistent, faster, and/or able to respond to changes in the target devices present in an area.

In accordance with a first aspect, there is provided a method of training a machine learning model, as defined in claim 1.

The method comprises receiving training data comprising a plurality of samples. Each sample corresponds to a transmission of a respective jamming signal to a respective target device of a plurality of target devices. Each sample comprises a jamming efficacy of the respective jamming signal. Each sample comprises a value of each of one or more signal parameters that define a waveform of the respective jamming signal. The method further comprises training, using the training data, the machine learning model to learn a mapping between each combination of target devices from the plurality of target devices and a respective waveform, whereby each waveform is effective, when transmitted in a collective jamming signal, to jam all of the target devices in the respective combination of target devices.

Advantageously, the method generates a trained machine learning model that is capable of determining a waveform with improved jamming for a given combination of target devices. In contrast, determining such a waveform by manually determining separate waveforms for each target device is not only time-consuming and inefficient, but also often fails to yield a waveform that is effective in jamming every device in the combination of target devices. For example, manually determined waveforms may jam some target devices effectively, while providing inadequate jamming to other target devices in the combination of target devices.

Advantageously, the machine learning model is trained on samples that comprise jamming efficacies for respective jamming signals corresponding to a respective target device. That is, the machine learning model is trained on samples of jamming efficacies that each correspond to individual target devices. This provides a fixed data set that is consistently measurable, by measuring the jamming efficacy of each target device. In contrast, training the machine learning model on jamming signals that are effective at jamming particular combinations of target devices may lead to an intractably large data set that would require considerable computational resource to process. For example, selecting the combinations and determining jamming signals for a combination would, in itself, require extensive computation and expertise. Furthermore, the number of possible combinations may make the problem intractable. In practice, the number of possible target devices for which jamming efficacies are measured may be relatively low (e.g. tens or hundreds of such target devices). However, the number of possible combinations of target devices quickly becomes very large (e.g. having only ten possible target devices would lead to over a thousand possible combinations). Therefore, training the machine learning model on samples corresponding to individual target devices provides a means of training the model to learn the mapping in a way that is less computationally intensive. In particular, if a single new target device is introduced into the training data, this requires only a single new set of data to be generated (rather than multiple sets based on various combinations including the new target device).

The training data may comprise a plurality of jamming efficacy profiles. Each jamming efficacy profile may comprise samples that are associated with a respective target device. Each jamming efficacy profile may define a phase space surface of jamming efficacies achieved for the respective target device at various values of the one or more signal parameters. The phase space surface need not be limited to a two- or three-dimensional surface, but may be any multidimensional surface. The number of dimensions of the phase space surface is determined by the number of signal parameters.

By a signal 'jamming' a target device, it is meant that the transmission of the jamming signal to the target device entirely prevents or substantially reduces the ability of the target device to successfully receive or successfully transmit a particular signal(s). A target device may be considered jammed when it is not able to receive a particular signal from a transmitter successfully and/or transmit a particular signal to a receiver successfully. A particular signal may be considered to be unsuccessfully transmitted or unsuccessfully received when a jamming signal causes sufficient interference to prevent the particular signal being demodulated, decoded, or otherwise understood by a receiver. The jamming may occur in the ISM band. However, it will be understood that jamming may occur in any other frequency band as required by the circumstance.

The term 'collective jamming signal' refers to a signal that, when transmitted, is effective to jam each of the target devices in the combination of target devices. The collective jamming signal may be concurrently transmitted to all of the target devices in the combination of target devices. The term 'collective' in this context indicates that a single signal, generated based on a single waveform, is capable of jamming each of the target devices in the combination of target devices.

The plurality of target devices may refer to a plurality of known, possible, or recognised target devices. That is, the plurality of target devices may be the target devices that are known to exist or operate in a certain technical field. The plurality of target devices may refer to a plurality of types of target devices. For example, the plurality of target devices may refer to a plurality of models of target devices that are known to exist or operate in a certain technical field. For example, the plurality of models of target devices may comprise models of target devices used in a particular industry or application or used by particular users operating in a technical field.

The combination of target devices may refer to a subset of the plurality of target devices. The combination of target devices may include every possible combination of the target devices in the plurality of target devices. The combination of target devices may comprise a combination of unique target devices (i.e. each target device may only appear once in the combination). Alternatively, the combination of target devices may comprise multiple of any target device. It will be appreciated that the waveform may be the same for a combination of target devices that comprises multiple instances of a particular target device (e.g. a particular model of target device) as it would be for a combination of target devices that comprises only one of the particular target device (e.g. the particular model of target device). In other words, a waveform may be specific to the types or models of target device present in the combination of target devices, rather than specific to the exact combination of target devices present.

The mapping learned by the model may comprise a relationship between each combination of target devices from the plurality of target devices and a respective waveform. The mapping may be one-to-one, one-to-many, or many-to-one. The mapping may comprise a function and/or a neural network that can receive, as an input, data indicative of a combination of target devices and output a waveform that is effective, when transmitted in a collective jamming signal, to jam all of the target devices in the combination of target devices.

It will be appreciated that a 'waveform' represents the structure and/or timing of an intended transmission. In this regard, a waveform may equally be referred to as a 'time plan' or a 'transmission plan' (each abbreviated as TP) for a transmission. A 'signal' comprises an impulse or a wave that is generated based on the waveform and is transmitted between devices. For example, the signal may comprise an electrical impulse, a light pulse, or an electromagnetic wave (e.g. a radio wave).

The machine learning model may comprise one or more artificial neural networks. The artificial neural network(s) may be implemented using specialised hardware, or may be implemented in software (which may emulate the operation of a hardware-based artificial neural network). Alternatively or additionally, the machine learning model may be implemented using other suitable machine learning techniques.

The machine learning model may be a reinforcement learning model. The reinforcement learning model may be a model-based reinforcement learning model. For example, the reinforcement learning model may comprise MuZero. MuZero is described in Schrittwieser, J., Antonoglou, I., Hubert, T., et al. (2020), 'Mastering Atari, Go, Chess and Shogi by Planning with a Learned Model', Nature, 588(7839), pp. 604-609, arXiv: 19.11082v2.

Advantageously, MuZero is a model-based reinforcement learning model that is capable of representing its operating environment without domain-specific knowledge of the operating environment. This allows MuZero to operate in novel contexts. In the present case, the MuZero model may be used to determine waveforms that jam target devices without the need to program the model with information about the target devices or even without information about how to optimise such a waveform.

In other implementations, the machine learning model may comprise other machine learning models suitable for learning a mapping between combinations of target devices and respective waveforms. This may include machine learning models that have not yet been developed.

The reinforcement learning model may comprise one or more artificial neural networks (hereinafter referred to simply as 'networks' for the sake of brevity). For example, the reinforcement learning model may comprise a policy network, a reward network, a scoring network, a representation network, and/or a dynamics network.

The policy network may be configured to determine possible waveforms for jamming the target devices in the combination of target devices. The policy network may be configured with a set of waveform criteria that a possible waveform must satisfy. In other words, the policy network may be configured to determine a 'permitted' choice of waveform. For example, the policy network may be configured with permitted values of: a duration of a transmission; a number of transmissions that may fit in a given duration; transmission frequencies; a duration of a sweep (i.e. when a signal begins at a first frequency and increases or decreases to a second frequency); and/or a number of sweeps in a given duration.

The reward network may be configured to determine and update a reward function that determines a reward based on values of the one or more signal parameters.

The scoring network may be configured to determine and update a scoring function that determines a score of a move in a search space of an optimisation procedure. The scoring function may be equivalent to the reward function.

The representation network may be configured to learn how to create an internal representation of the training data. In the present case, the representation network may be configured to learn how to create an internal representation of a waveform and a corresponding jamming efficacy based on the training data.

The dynamics network may be configured to model the operating environment of the machine learning model. In the present case, the dynamics network may be configured to model the possible waveforms and changes to the one or more signal parameters of the waveforms. That is, the dynamic network is configured to learn how to evolve a current state of the model to a subsequent state by taking an action. In the present case, the dynamic network is configured to learn how to update the one or more signal parameters of the waveform to arrive at an updated waveform.

Each of the networks in the machine learning model may comprise a plurality of layers. Each layer may comprise a plurality of nodes. For example, each network in the machine learning model may comprise an input layer, one or more hidden layers, and an output layer.

Optionally, the machine learning model learns a mapping between each combination of target devices and an output value of each of one or more signal parameters of the respective waveform.

The respective waveform may be characterised by the one or more signal parameters. The one or more signal parameters may comprise one or more frequencies and/or one or more time periods. The frequencies and/or time periods may define the respective waveform. The one or more signal parameters may comprise a type of a feature of the waveform, such as 'sweep', 'hop', or 'mute'.

Optionally, the machine learning model is trained to receive data indicative of a particular combination of target devices and to determine, based on the particular combination of target devices, a waveform of a collective jamming signal effective to jam all of the target devices in the particular combination of target devices.

Advantageously, the machine learning model is able to determine a waveform that will effectively jam all of the target devices in the indicated combination. That is, the machine learning model determines a single waveform that can jam multiple target devices. This allows a single waveform to be provided to a jamming apparatus in order to jam that combination of target devices. In contrast, in conventional methods it may be necessary to provide multiple waveforms, each capable of jamming a single target device and additional processing (e.g. human processing, or processing by the jamming apparatus) is required in order to jam multiple target devices. Therefore, the machine learning model is able to increase the efficiency of jamming multiple target devices.

Optionally, training the machine learning model comprises selecting a combination of target devices from the plurality of target devices. Training the machine learning model may further comprise determining, by an optimisation procedure, an optimised value of each of one or more signal parameters for determining a waveform for jamming the selected combination of target devices. Training the machine learning model may further comprise determining, using a reward function, a reward associated with the optimised values of the one or more signal parameters. Training the machine learning model may further comprise updating the optimisation procedure based on the reward.

The combination of target devices may be selected randomly, may be selected by a human operator, and/or may be selected based on predetermined selection criteria or algorithms.

The optimisation procedure may comprise a heuristic search procedure (e.g. algorithm), such as Monte Carlo Tree Search (MCTS). MCTS is configured to randomly sample a search space and to identify an 'optimal' decision based on a given situation. More specifically, MCTS simulates moves in the search space that are likely to lead to a positive outcome. MCTS estimates a 'score' for each move in the search space and selects the move that is most likely to lead to the positive outcome. In the present case, for example, MCTS may simulate a change to a signal parameter of a given waveform that is likely to lead to an improved jamming efficacy. MCTS may estimate a score (e.g. reward) of each change to the signal parameter and then select the change that is most likely to lead to an improved jamming efficacy.

The optimisation procedure determines an optimised value. It will be appreciated that by 'optimised' it is merely meant that it is a value determined by the optimisation procedure. The optimised value may not necessarily be the optimal value, but is merely the value returned by the optimisation procedure in this iteration.

Training the machine learning model may further comprise iteratively determining the optimised value after updating the optimisation procedure. In other words, training the machine learning model may comprise repeating the optimisation procedure. The optimisation procedure may be repeated until a termination criterion is reached. The termination criterion may be that a threshold number of iterations has been performed. The termination criterion may be that the optimised value has not changed within a threshold number of iterations. The termination criterion may be that all of the target devices are jammed.

Updating the optimisation procedure may be achieved by updating one or more model parameters that characterise the optimisation procedure. The one or more model parameters may comprise one or more weights associated with one or more nodes of a network used by the optimisation procedure (e.g. a search tree).

The reward function may comprise an intermediate reward function and one or more termination reward functions. The intermediate reward function may determine a reward based on the optimised values when the waveform does not completely or adequately jam all of the target devices in the combination of target devices.

The one or more termination reward functions may comprise a success reward function and/or a failure reward function. The one or more termination reward functions may determine the reward responsive to one or more termination criteria being satisfied. For example, the termination criteria may comprise a success criterion. In response to the success criterion being satisfied, the success reward function may determine the reward. The termination criteria may comprise a failure criterion. In response to the failure criterion being satisfied, the failure reward function may determine the reward.

The success reward function may determine a reward that is greater than the possible scores that may be determined by the intermediate reward function. For example, the success reward function may comprise a positive integer (e.g. 10) that is greater than the biggest score in the range of score that may be determined by the intermediate reward function (e.g. between -1 and 1). The success criterion may be that all of the target devices in the combination of target devices have been jammed.

The failure reward function may determine a reward that is less than the possible scores that may be determined by the intermediate reward function. For example, the failure reward function may comprise a negative integer (e.g. -10) that is less than the smallest score in the range of scores that may be determined by the intermediate reward function (e.g. between -1 and 1). The failure criterion may be that a threshold number of iterations have been performed.

Optionally, determining the reward comprises determining a statistic representing a jamming efficacy of the waveform across the selected combination of target devices, and wherein the reward function is a function of the statistic representing the jamming efficacy.

The statistic may be determined based on a normalised jamming efficacy. For example, the value of the jamming efficacy may be affected by the jamming power required by a particular target device (e.g. in the case of a jamming-to-signal ratio). Advantageously, in order to make jamming efficacies comparable across different target devices, the jamming efficacy may be normalised prior to determining the statistic. The statistic may be determined based on a jamming efficacy (normalised or not) that has been added to, subtracted from, multiplied by, or divided by a constant.

Optionally, determining the statistic comprises determining: a mean of the respective jamming-to-signal ratios of each target device in the combination of target devices; a maximum jamming-to-signal ratio of the respective jamming-to-signal ratios of each target device in the combination of target devices; or a standard deviation of the respective jamming-to-signal ratios of each target device in the combination of target devices.

Advantageously, these examples of statistics allow the reward function to adequately reward moves that improve upon the jamming-to-signal ratio. The jamming-to-signal ratio is equal to, for a given target device, the ratio of the power of the respective jamming signal required to jam transmissions from the given target device to the power of a signal transmitted and/or received by the given target device. Therefore, to jam a device effectively, the jamming-to-signal ratio should be minimised. In other words, it is advantageous to jam a device with the minimum possible jamming power compared to the signal power of the transmission or reception to be jammed. Therefore, determining the reward function based on, for example, the mean of the jamming-to-signal ratios allows the reward function to respond to a change in the jamming-to-signal ratios across all of the target devices in the combination of target devices. Alternatively, determining the reward function based on, for example, the maximum jamming-to-signal ratio allows the reward function to respond to a change in the maximum jamming-to-signal ratio across all of the target devices in the combination of target devices. The maximum jamming-to-signal ratio is the 'worst case scenario' because it is advantageous to minimise the jamming-to-signal ratios and therefore it is appropriate to choose the maximum value. It will be appreciated that if a measure of jamming efficacy was chosen that should be maximised, it would be preferable to choose the minimum of this measure across the target devices.

It will be appreciated that other suitable statistics (e.g. mean, median, maxima, minima, standard deviation, variance) may equally be used in the reward function. It will also be appreciated that these examples of statistics may also be used for other examples of jamming efficacies (i.e. other than the jamming-to-signal-ratio).

Optionally, the reward function comprises a regularisation term that is a function of a duration of the waveform as a fraction of a maximum permitted duration of the waveform.

Advantageously, the use of a regularisation term reduces the likelihood of overfitting to training data and thus improves the output of the machine learning model. Furthermore, by calculating the regularisation term as a function of the duration of the waveform, the reward function may be configured to penalise (e.g. reduce the reward) for waveforms that are too long. Increasing the duration of the waveform not only introduces additional computational complexity, but may be detrimental to the jamming of target devices. That is, as the duration of the waveform increases, so does the duration between repetitions of the waveform. Therefore, as the duration of the waveform increases, it takes longer for the waveform to revisit a respective target device in the combination. This may reduce the jamming efficacy at the respective target device. Advantageously, by reducing the reward as the duration of the waveform increases, the reward function increases the likelihood of the machine learning model determining a shorter waveform that does not suffer from these problems.

Optionally, the method further comprises generating the training data by, for each device in the plurality of target devices, transmitting one or more jamming signals each having a specified value of each of the one or more signal parameters, and measuring the jamming efficacy of each of the one or more jamming signals.

Advantageously, the training data is generated by transmitting one or more jamming signals and measuring a corresponding jamming efficacy. That is, the training data may be generated empirically. This allows the machine learning model to be trained without prior knowledge of how to determine waveforms for combinations of target devices. Instead, it is possible to train the machine learning model to determine waveforms for a combination of target devices having only measured jamming efficacy for individual target devices. This provides a more efficient means for training a machine learning model that is able to determine waveforms for a combination of target devices without either the machine learning model or a user of the machine learning model having any prior knowledge or experience of such a combination of target devices.

The method may comprise varying the specified values of each of the one or more signal parameters and re-measuring the jamming efficacy of each of the one or more jamming signals. In other words, a plurality of samples is generated for each target device by varying the signal parameters and measuring a corresponding jamming efficacy.

The method may further comprise determining whether each target device in the plurality of target devices is jammed upon receipt of the one or more jamming signal.

The training data may be generated by a system of test equipment that is configured to generate training data by transmitting the one or more jamming signals and measuring the jamming efficacy. The system of test equipment may be configured to automatically generate the training data, and any additional training data required. In other words, the system of test equipment may comprise Automatic Test Equipment (ATE).

In accordance with a second aspect, there is provided a machine learning model trained as described herein and as defined in claim 9.

In accordance with a third aspect, there is provided a method of determining a waveform of a signal, as defined in claim 10.

The method comprises receiving, by a machine learning model trained as described herein, data indicative of a combination of target devices. The method further comprises determining, by the machine learning model and based on the combination of target devices, a waveform of a collective jamming signal effective to jam all of the target devices in the combination of target devices.

The method comprises determining a waveform of a collective jamming signal but it is not necessary for the collective jamming signal itself to be generated. For example, the method may further comprise transmitting the waveform and/or an output value of each of one or more signal parameters of the waveform to a signal generator to generate and transmit the collective jamming signal.

Optionally, determining the waveform comprises determining an output value of each of one or more signal parameters of the waveform.

Optionally, the data indicative of a combination of target devices comprises data indicating the presence of the combination of target devices in a target area. As used herein, the term 'target area' refers to a region in which target devices are jammed using the techniques disclosed herein. A target area may be, for example, a building or a particular room within a building.

That is, the data indicative of a combination of target devices may indicate that the combination of target devices is present in a target (e.g. geographical) area or location. Alternatively, the data indicative of a combination of target devices may comprise an input of a specified combination of target devices. That is, the data indicative of a combination of target devices need not correspond to the physical presence of any target devices. The input may be provided, for example, in a training or testing scenario. The input may be provided in preparation for the combination of target devices being present in a future scenario.

Optionally, the method further comprises transmitting, based on the waveform, the collective jamming signal.

Optionally, the method further comprises receiving, by the machine learning model, updated data indicating a change in the combination of target devices. The method may further comprise determining, by the machine learning model and based on the change in the combination of target devices, an updated waveform of an updated collective jamming signal effective to jam all of the target devices in the changed combination of target devices.

Advantageously, the machine learning model allows rapid adjustment to the waveform based on changes in the combination of target devices. Conventionally, the determination of a waveform is a complicated and lengthy process that cannot be performed reactively. The use of a machine learning model allows the method to adapt to changes in the combination of target devices in order to update the waveform to maintain effective jamming across the combination of target devices. It will be appreciated that the receiving of updated data may repeat as often as required for the waveform to be updated to effectively jam the combination of target devices.

Changes in the combination of target devices may include: target devices joining the combination of target devices; target devices leaving the combination of target devices; changes to the operating characteristics of one or more of the target devices; and/or changes to an environment of the target area in which the combination of target devices is located.

Optionally, the output values are determined to minimise a statistic relating to a jamming-to-signal ratio of the collective jamming signal.

Optionally, the statistic is defined as: a mean of the respective jamming-to-signal ratios of each target device in the combination of target devices; a maximum jamming-to-signal ratio of the respective jamming-to-signal ratios of each target device in the combination of target devices; or a standard deviation of the respective jamming-to-signal ratios of each target device in the combination of target devices.

Optionally, the one or more signal parameters comprise a respective dwell time for each respective target device. The respective dwell time may indicate a duration for which the collective jamming signal targets the respective target device.

By 'targeting' a respective target device it is meant that, at that given time, the collective jamming signal has a waveform that is effective to jam the respective target device. Targeting a device does not necessarily imply that the collective jamming signal is transmitted only to the respective target device, merely that the waveform of the collective jamming signal is configured to jam the respective target device that is being targeted. Therefore, the respective dwell time may be considered to indicate a duration for which the collective jamming signal has a waveform that is effective to jam the respective target device.

Optionally, the one or more signal parameters comprise a respective revisit time for each respective target device. The respective revisit time may indicate a duration for which the collective jamming signal targets other target devices in the combination of target devices before returning to the respective target device.

To appreciate the meaning of a 'dwell time' and a 'revisit time' one may define a period of a waveform of a signal. The period is defined as the duration between repetitions of identical portions of the waveform. In other words, it is the duration of the waveform before the waveform repeats. Since the waveform targets each target device in the combination of target device, the period of the waveform comprises a respective portion in which it targets each target device. Each of these portions has a respective duration that is equal to the respective dwell time for the respective target device. The duration between the end of the respective dwell time and the start of the next repetition of that same respective dwell time (i.e. after having targeted each of the other target devices in the combination of target devices) is equal to the respective revisit time for the respective target device. Therefore, the period of the waveform is equal to the sum of the dwell time and the revisit time for any target device in the combination of target devices.

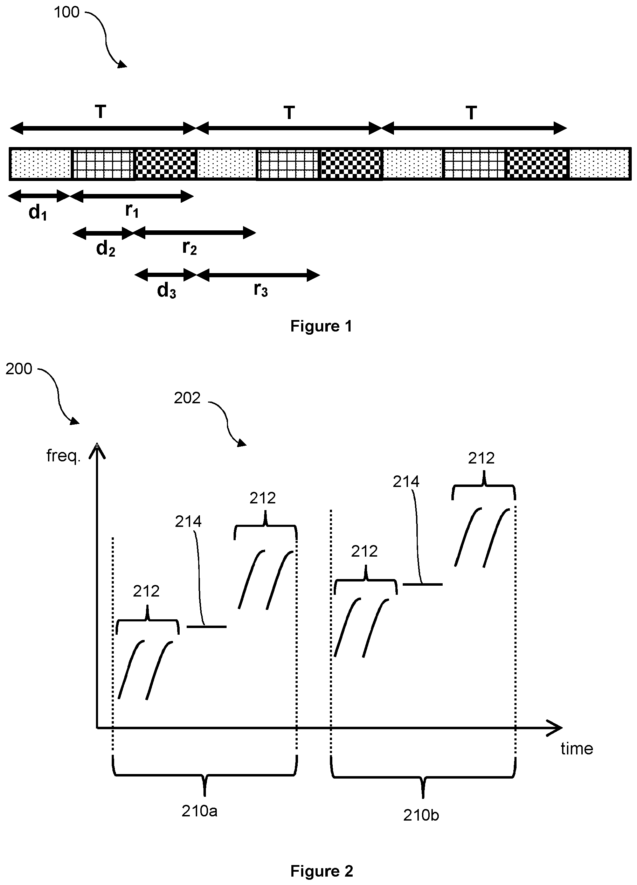

A schematic 100 of this relationship is shown in Figure 1. The schematic 100 illustrates transmission blocks in which a signal targets three different target devices. Portions in which a first target device is targeted are shown as dotted. Portions in which a second target device is targeted are shown as hatched. Portions in which a third target device is targeted are shown as chequered. As can be seen in Figure 1, the signal (or waveform) targets each target device for dwell times *d₁, d₂, d₃,* respectively. The signal then targets the other target devices during revisit times *r₁, r₂, r₃,* respectively. The sum of *d₁* and *r₁*, the sum of *d₂* and *r₂*, and the sum of *d₃* and *r₃* are each equal to the period *T* of the signal. The signal repeats after each period *T.*

It will be appreciated that one or more of the target devices in the combination of target devices may have multiple dwell and revisit times, for example, if a target device is targeted more than once within a period of the waveform. In this case, the period of the waveform is equal to the sum of all of the dwell times and all of the revisit times for that target device. Furthermore, even though the dwell and revisit times in Figure 1 are shown as equal for each target device, it will be appreciated that dwell times and revisit times may be different from each other and different for each respective target device.

Equivalently, the dwell and revisit times may be defined in terms of a duty cycle of the collective jamming signal. A duty cycle for a respective target device is equal to the respective dwell time expressed as a fraction or a percentage of the period of the waveform.

Optionally, the one or more signal parameters comprise one or more signal parameters that define a period of sweeping, in which a jamming signal begins at a first frequency and increases or decreases to a second frequency.

The signal beginning at a first frequency and increasing or decreasing to a second frequency may be referred to as a 'sweep'. The period of sweeping may comprise a single sweep. The period of sweeping may comprise a plurality of sweeps. The sweep may take any form and may be linear or non-linear.

Optionally, the one or more signal parameters comprise one or more signal parameters that define a period of constant-frequency transmission, in which a jamming signal remains at a constant frequency for a predetermined duration.

The period of constant-frequency transmission may occur before or after a period of sweeping. The period of constant-frequency transmission may occur independently of any periods of sweeping. The period of constant-frequency transmission may occur directly following a period of sweeping and/or directly before a period of sweeping. The period of constant-frequency transmission may comprise a change in transmission frequency compared to a signal transmitted directly before or directly after the period of constant-frequency transmission. That is, a signal transmitted during the period of constant-frequency may be transmitted at a frequency that is different from the second frequency of a period of sweeping that occurs directly before the period of constant-frequency and/or at a frequency that is different from the first frequency of a period of sweeping that occurs directly after the period of constant-frequency. Such a period of constant-frequency may be referred to as a 'hop'.

A waveform may comprise a plurality of sweeps and hops. Such a waveform may be referred to as a 'sweep/hop waveform'. A waveform may comprise other transmission features such as mute periods, in which no signal is transmitted. The waveform may comprise modulation applied to one or more of the sweeps and/or one or more of the hops. For example, the waveform may comprise amplitude and/or frequency modulation.

A time-frequency plot 200 of an example of such a waveform 202 is shown in Figure 2. The waveform 202 in Figure 2 is a sweep/hop waveform, and comprises a first portion 210a and a second portion 210b. Each portion 210a, 210b of the waveform 202 may be configured to target a respective target device. For example, the first portion 210a may be configured to target a first target device (not shown) and the second portion 210b may be configured to target a second target device (not shown). In this regard, it will be noted that, while the overall structure of the portions 210a, 210b appear the same, the frequency ranges used in each portion 210a, 210b differ from one another.

The plot 200 depicts a single period of the waveform 202 and thus it may be understood that the waveform 202 may periodically repeat, each repetition comprising the first portion 210a and the second portion 210b shown in Figure 2.

Each portion 210a, 210b comprises one or more periods of sweeping and one or more periods of constant-frequency transmission. In this example, each portion 210a, 210b comprises two periods 212 of sweeping and a single period 214 of constant-frequency transmission. As can be seen in Figure 2, each period 212 of sweeping comprises two sweeps. The periods 214 of constant-frequency transmission in this example may be considered hops, because the constant-frequency transmission occurs at a frequency that is different from the frequency at the end of the first period of sweeping in each portion, and is also different from the frequency at the start of the second period of sweeping in each portion.

While, in Figure 2, each portion 210a, 210b is depicted as having the same approximate structure, it will be appreciated that any combination of sweeps, hops, or other transmission features may be used such that the portion effectively targets the respective target device. Furthermore, a period of the waveform 202 may comprise more than two portions 210a, 210b. For example, the number of portions 210a, 210b may correspond to (but not necessarily be equal to) the number of target devices in a combination of target devices. That is, the waveform 202 may include at least one portion for each target device in the combination of target devices. Each portion may comprise any number of sweeps, hops, or other transmission features as necessary to jam the respective target device.

During a dwell time, the waveform of the collective jamming signal may comprise one or more sweeps and/or one or more hops. The waveform of the collective jamming signal may be a sweep/hop waveform. That is, the collective jamming signal may comprise periods of sweeping and/or periods of constant-frequency transmission for each target device in the combination of target devices. For example, in the case of Figure 2, the dwell time for the first target device (targeted by the first portion 210a) is equal to the duration of the first portion 210a. Similarly, the dwell time for the second target device (targeted by the second portion 210b) is equal to the duration of the second portion 210b. The revisit time for the first target device is equal to the duration of the second portion 210b (assuming that the period of the waveform 202 does not include any further portions for targeting any further target devices). The revisit time for the second target device is equal to the duration of the first portion 210a (assuming that the period of the waveform 202 does not include any further portions for targeting any further target devices).

Optionally, the jamming efficacy comprises a jamming-to-signal ratio equal to, for a given target device, the ratio of the power of the respective jamming signal required to jam the transmission of any/or the reception of a signal by the given target device to the power of the signal transmitted or received by the given target device.

Advantageously, the jamming-to-signal ratio provides a suitable means of measuring the jamming efficacy of a given signal. It will be appreciated that optimising or improving a jamming-to-signal ratio involves minimising the jamming-to-signal ratio for a given jamming signal. That is, a jamming signal is considered to be 'better' at jamming a given device if the jamming-to-signal ratio is low. The jamming-to-signal ratio may be used as the jamming efficacy for any signal described herein (e.g. respective signals, collective signals, etc.). The jamming-to-signal ratio (or other examples of jamming efficacy) may be measured in decibels (dB).

Any of the methods described herein may be computer-implemented methods. In particular, the methods may be embodied in a computer program and/or a computer-readable medium. The computer-readable medium may comprise instructions that, when executed by a computer, cause any of the methods disclosed herein to be performed.

The features, functions, characteristics, and advantages of each of the aspects may be combined with those of any of the aspects. In particular, it will be appreciated that any advantages that apply to a method apply to the corresponding apparatus, and vice versa. Furthermore, the advantages associated with training the machine learning model apply correspondingly to the method of determining a waveform of a signal using the machine learning model.

Example aspects of the present disclosure will now be described with reference to the Figures in which:
Figure 1 depicts the relationship between dwell time and revisit time in a waveform of a jamming signal;
Figure 2 depicts a time-frequency plot containing an example waveform of a jamming signal;
Figure 3A depicts a schematic of training a machine learning model to learn a mapping between combinations of target devices and respective waveforms;
Figure 3B depicts a schematic of determining, by a machine learning model, a waveform of a collective jamming signal effective to jam all of the target devices in a combination of target devices;
Figure 4 depicts a system comprising a training apparatus and a jamming apparatus;
Figure 5A is a flow chart of a first method of training a machine learning model;
Figure 5B is a flow chart of a second method of training a machine learning model;
Figure 6 is a flow chart of a method of determining a waveform of a signal; and
Figure 7 is a flow chart of a method of training a machine learning model and determining a waveform of a signal.

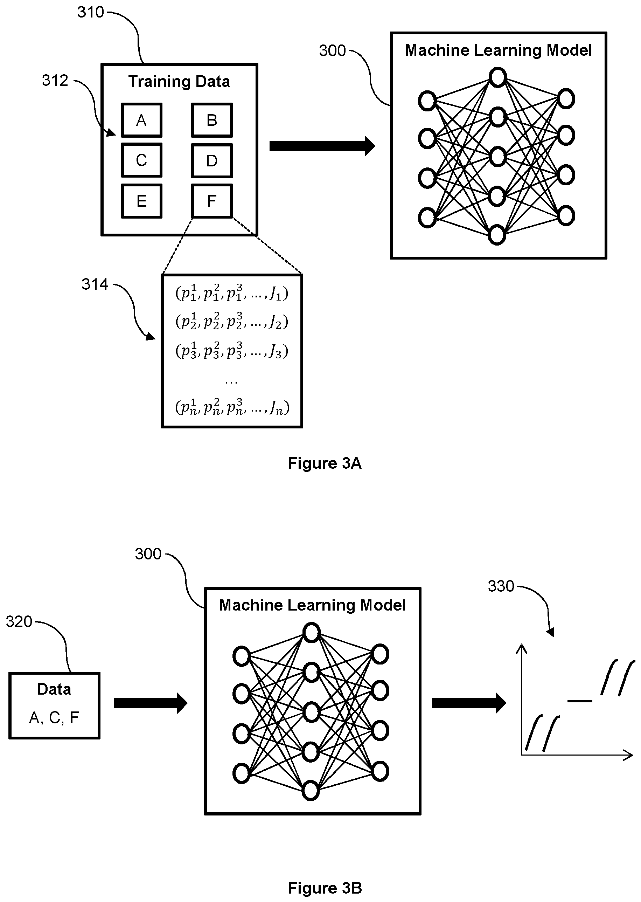

Referring to Figure 3A, a method of training a machine learning model 300 will now be described. The machine learning model 300, as depicted in Figure 3A, is represented as a single network comprising four input nodes, five hidden-layer nodes, and four output nodes. However, this is merely for illustrative purposes. It will be appreciated that the machine learning model 300 may comprise multiple networks, each with three or more layers, and each layer having multiple nodes.

One example machine learning model 300 that may be used in the methods described herein is a reinforcement learning model. In particular, the reinforcement learning model may comprise MuZero. MuZero is a model-based reinforcement learning model developed by DeepMind Technologies Limited and described in Schrittwieser, J., Antonoglou, I., Hubert, T., et al. (2020), 'Mastering Atari, Go, Chess and Shogi by Planning with a Learned Model', Nature, 588(7839), pp. 604-609, arXiv: 19.11082v2.

MuZero is capable of representing its operating environment without domain-specific knowledge of the operating environment. In other words, MuZero is capable of generating, based on training data, a representation of the possible 'states' of its operating environment and is also capable of mapping each of these states to a subsequent state based on an 'action' or 'move'. MuZero can do this without prior knowledge of the operating environment, its states, or the possible actions that can be taken. This makes MuZero particularly good at learning how to 'play' games, such as Go or chess. In these examples, MuZero can generate an internal representation of the Go or chess board, as well as an internal mapping of how to move from one state of the board to the next by taking an action (i.e. by moving a piece on the Go or chess board). MuZero is then able to learn which moves are best, by rewarding moves based on their ability to win the game that MuZero is playing.

Advantageously, the methods as described herein involve treating the generation of a waveform for a jamming signal as a game. The 'game' of generating the waveform is then provided to MuZero, which can, based on training data relating to the jamming of individual target devices, learn how to generate a waveform to jam a combination of target devices. In this example, a 'state' comprises a particular waveform, an 'action' or 'move' comprises a change to the waveform (e.g. a change to one or more signal parameters that characterise the waveform), and 'winning' the game comprises generating a waveform that effectively jams all of the target devices in the combination of target devices.

In an example implementation of the present disclosure, the machine learning model comprises a fully connected multi-layer perceptron neural network. By 'fully connected' it is meant that the neural network comprises a plurality of layers, where each node in a layer is connected to every node in the adjacent layers. The machine learning model may comprise a representation network, a dynamics network, a reward network, a scoring network, and a policy network. The representation network may comprise: an input layer comprising 6 nodes; a (e.g. single) hidden layer comprising 16 nodes; and an output layer comprising 16 nodes. The dynamics network may comprise: an input layer comprising 75 nodes; a (e.g. single) hidden layer comprising 64 nodes; and an output layer comprise 16 nodes. The reward network may comprise: an input layer comprising 16 nodes; a (e.g. single) hidden layer comprising 32 nodes; and an output layer comprising 221 nodes. The scoring network may comprise: an input layer comprising 16 nodes; a (e.g. single) hidden layer comprising 32 nodes; and an output layer comprising 221 nodes. The policy network may comprise: an input layer comprising 16 nodes; a (e.g. single) hidden layer comprising 64 nodes; and an output layer comprising 59 nodes.

Returning to Figure 3A, the training process for the machine learning model 300 can be seen. The machine learning model 300 receives training data 310. The training data 310 relates to a plurality 312 of target devices. In the Figure, each different target device is labelled with a letter A-F. The training data 310 comprises a plurality 314 of samples. In Figure 3A, a plurality 314 of samples is shown, all of which correspond to target device F. It will be appreciated that each other target device in the plurality 312 of target devices has corresponding samples.

Each sample in the training data 310 corresponds to a transmission of a respective jamming signal to a respective target device of the plurality 312 of target devices. Each sample comprises a jamming efficacy of the respective jamming signal. Each sample further comprises a value of each of one or more signal parameters that define a waveform of the respective jamming signal.

In Figure 3A, an *i^{th}* sample is provided in the format: ( ${p}_{i}^{1} , {p}_{i}^{2} , {p}_{i}^{3} , … , {J}_{i}$). In this notation, each of the one or more signal parameters is denoted as ${p}_{i}^{k}$*,* for the *k^{th}* signal parameter. For example, the value of the first signal parameter for the second sample is given as ${p}_{2}^{1}$. In this notation, each of the jamming efficacies is denoted as *Jᵢ* for the *i^{th}* sample. The jamming efficacy may comprise a jamming-to-signal ratio equal to the ratio of the power of the respective jamming signal required to jam the transmission of a signal by the given target device to the power of the signal transmitted by the given target device. Alternatively or additionally, the jamming efficacy may comprise a jamming-to-signal ratio equal to the ratio of the power of the respective jamming signal required to jam reception of a signal by the given target device to the power of a signal received by the given target device. That is, the jamming-to-signal ratio may be determined based on jamming of the transmission of signals by a target device or based on the jamming of the reception of signals by a target device. If the target device is a transceiver (i.e. if the target device is capable of both transmitting and receiving signals) and both transmission and reception of signals is to be jammed, the target device may be treated as two effective target devices (e.g. one transmitter and one receiver), each effective target device being associated with a respective jamming-to-signal ratio.

In Figure 3A, each sample is shown to have three signal parameters, but it will be appreciated that each sample may have more or fewer signal parameters. The number of signal parameters may be determined based on how many signal parameters are required (or preferred) to define a waveform. The plurality 314 of samples shown in Figure 3A is shown to comprise *n* samples, and thus the final sample is shown as ( ${p}_{n}^{1} , {p}_{n}^{2} , {p}_{n}^{3} , … , {J}_{n}$)*.* While each sample is depicted as a tuple, other suitable formats for the samples may be used, as appropriate.

The training data may be generated in any appropriate manner for obtaining the plurality 314 of samples. In one example, generating the training data comprises, for each target device, placing the target device into an electromagnetically-isolated environment (e.g. a Faraday cage) alongside a test receiver. The test receiver is configured to receive any signals transmitted by the target device. The test receiver is further configured to generate an output that indicates that the test receiver has received a signal from the target device. The output may indicate, for example, a strength of the signal received from the target device.

Alongside the target device and the test receiver, a jamming transmitter is also placed into the electromagnetically-isolated environment. The jamming transmitter is configured to transmit a jamming signal in the electromagnetically-isolated environment. The target device begins transmitting a test signal that is receivable by the test receiver. The jamming transmitter then transmits a jamming signal having a waveform characterised by one or more signal parameters. Values of the one or more signal parameters are varied until the jamming signal successfully jams the transmission of the test signal. That is, the values are varied until the jamming signal causes sufficient interference to prevent the test signal being demodulated, decoded, or otherwise understood by the test receiver. At this point, the values of the one or more signal parameters and the corresponding jamming efficacy are determined and recorded. The values may be further varied and further corresponding jamming efficacies are recorded to generate the plurality 314 of samples for the target device. The process may then be repeated for each other target device in the plurality 312 of target devices to generate the training data 310.

The above example applies to a scenario in which the target device is transmitting, and the jamming signal is intended to jam transmissions. However, a corresponding process may be applied to generate training data when the jamming signal is intended to jam reception by the target device (in which case the test receiver is replaced by a test transmitter). A corresponding process may also be applied to generate training data for one or more jamming signals intended to jam reception and transmission by the target device (in which case the test receiver is accompanied by a test transmitter, or replaced by a test transceiver).

The training data 310 is received by the machine learning model 300 and the machine learning model 300 is trained using the training data 310. More specifically, the machine learning model 300 learns a mapping between each combination of target devices from the plurality of target devices and a respective waveform. The waveform is effective, when transmitted in a collective jamming signal, to jam all of the target devices in the respective combination of target devices.

The machine learning model 300 selects a combination of target devices from the plurality 312 of target devices. For example, the machine learning model may select a combination comprising target devices A, B, and D. The machine learning model 300 then determines, by an optimisation procedure, an optimised value for each of the one or more signal parameters for determining a waveform to jam the selected combination of target devices (e.g. target devices A, B, and D).

Determining the optimised value may comprise initialising the optimisation procedure with an initial value for each of the one or more signal parameters. Determining the optimised value may further comprise sampling, by the optimisation procedure, a search space to identify a move in the search space (e.g. a change to one or more of the initial values). Determining the optimised value may further comprise estimating a score for the move in the search space. The score for the move may be calculated by a scoring function. Determining the optimised value may further comprise selecting a move in the search space that has a maximum score associated with the move.

The moves in the search space represent a change to one or more of the initial values of the one or more signal parameters. Therefore, the selected move leads the machine learning model 300 to select an optimised value of each of the one or more signal parameters.

Once an optimised value has been determined for each of the one or more signal parameters, the machine learning model 300 determines, using a reward function, a reward associated with the one or more optimised values of the one or more signal parameters. Determining the reward may comprise determining a statistic representing a jamming efficacy of the waveform across the combination of target devices. The reward function may be a function of the statistic. For example, determining the reward may comprise determining a mean of the respective jamming-to-signal ratios of each target device in the combination of target devices. The reward function may, in that example, be a function of the mean.

In some examples, the reward function and the scoring function may be the same. In such cases, the function may merely be referred to as the reward function. In one such example, the reward function, *u,* may be given by the following expression: $u = \left\{\begin{matrix}α ⋅ δ \left({mean}_{d ϵ devices}\left(1-normalise\left({J}_{d}\right)\right)+β⋅δ\left(\frac{{T}_{used}}{{T}_{total}}\right)\right) & Intermediate reward function \\ + 10 & Success reward function \\ - 10 & Failure reward function\end{matrix}\right.$ where *α* and *β* are hyperparameters, *δ* is a difference of the value between the current 'state' and the previous 'state', *d* is an index representing each target device in the combination of target devices, *J_{d}* is the jamming efficacy, *T_{used}* is the duration of the waveform that is currently being assessed by the machine learning model 300, and *Tₜₒₜₐₗ* is the maximum permitted duration of the waveform. As can be seen in this example reward function, the reward function is a function of a mean of the jamming efficacy over all of the target devices in the combination of target devices. More specifically, the reward function is a function of the mean of 1 - *normalise*(*J_{d}*)*,* in which *normalise*(*J_{d}*) represents a normalised form of *J_{d}.*

Normalising the jamming efficacy may comprise adding, subtracting, multiplying, or dividing each jamming efficacy by a normalisation factor. The same normalisation factor may be used for each jamming efficacy. Thereby, normalising the jamming efficacy renders each jamming efficacy comparable with each other jamming efficacy in spite of variations in the jamming power used at each target device. For example, normalising the jamming efficacy may comprise applying (e.g. adding or subtracting) an offset to the jamming efficacy to account for an expected transmission power of the target device and/or an expected link loss of the target device. The expected link loss may be caused by, for example, antenna efficiency, propagation distance, and/or the terrain covered during propagation of a signal. The offset need not be constant. For example, the offset may be frequency dependent.

As can be seen above, the reward function comprises three cases in which different functions are provided. The intermediate reward function is used to determine the reward when the optimised values define a waveform that does not completely or adequately jam all of the target devices in the combination of target devices. The success reward function is applied when a success criterion is satisfied, such as when the optimised values define a waveform that completely or adequately jams all of the target devices in the combination of target devices. The failure reward function is applied when a failure criterion is satisfied, such as when a threshold number of iterations has been performed.

The success and failure reward functions are provided as +10 and -10 respectively in the above function. However, it will be appreciated that other constant values may be chosen for these functions. These values are merely chosen so as to provide a large reward or 'punishment' (i.e. the opposite of a reward) when the machine learning model 300 succeeds or fails.

Once the reward has been determined, the machine learning model 300 updates the optimisation procedure based on the reward. The machine learning model 300 may update model parameters (e.g. weights) of the optimisation procedure based on the reward.

This process is performed iteratively in order for the machine learning model 300 to learn to generate a waveform effective to jam all of the target devices in the selected combination of target devices. The machine learning model 300 may then proceed to select another, different combination of target devices from the plurality 312 of target devices and repeat the process.

Turning to Figure 3B, a method of determining a waveform of a signal will now be described. The machine learning model 300, which has now been trained according to the above, receives data 320 indicative of a combination of target devices. For example, the data 320 may comprise a user input indicating a combination of target devices that the user wants to jam. The data 320 may comprise data indicating the presence of the combination of target devices in a target area. For example, the data 320 may comprise one or more measurements that indicate the presence of the combination of target devices in a target area. Such measurements may be performed by scanning the radio spectrum to detect signals emanating from devices in the target area. The detected signals can be analysed to identify which target devices are present in the target area. In the example shown in Figure 3B, the combination of target devices comprises target devices A, C, and F.

The machine learning model 300 then determines, based on the combination of target devices, a waveform 330 of a collective jamming signal effective to jam all of the target devices in the combination of target devices. The waveform 330 is schematically illustrated as a sweep-hop waveform in Figure 3B but it will be appreciated that the waveform 330 may take any form that is appropriate for jamming the combination of target devices.

The machine learning model 300 may further receive updated data indicating a change in the combination of target devices. For example, the updated data may indicate that an additional target device has joined the combination (e.g. target device E) and/or that a target device has left the combination (e.g. target device C leaves, leaving only target devices A and F in the combination). The machine learning model 300 may determine, based on the change, an updated waveform of an updated collective jamming signal effective to jam all of the target devices in the changed combination of target devices.

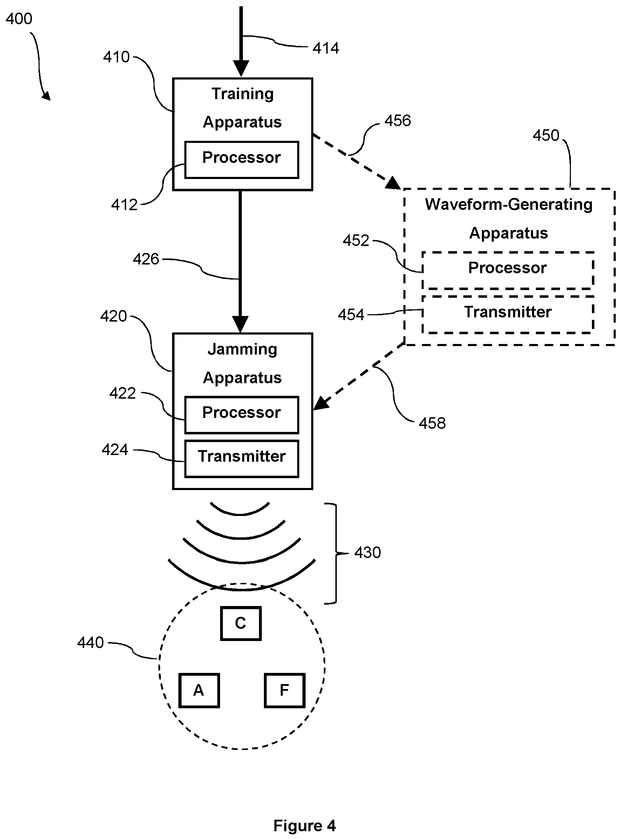

Turning to Figure 4, a system 400 is depicted that is configured to perform the methods described herein. The system 400 comprises a training apparatus 410 and a jamming apparatus 420. The training apparatus comprises a processor 412. The training apparatus may further comprise a transmitter (not shown). The jamming apparatus comprises a processor 422 and a transmitter 424.

The processor 412 of the training apparatus 410 is configured to execute the method of training a machine learning model as described herein. In doing so, the training apparatus 410 receives training data as indicated by arrow 414. After training the machine learning model, the training apparatus 410 may be configured to transmit the (trained) machine learning model to the jamming apparatus 420, as represented by arrow 426.

The processor 422 of the jamming apparatus 420 may be configured to execute the method of determining a waveform of a signal as described herein. The jamming apparatus 420 may be configured to transmit, via the transmitter 424, a collective jamming signal 430. For consistency with the example shown in Figure 3B, the combination 440 of target devices in Figure 4 comprises target devices A, C, and F.

In some examples, the system 400 may further comprise a waveform-generating apparatus 450. The waveform-generating apparatus 450 may comprise a processor 452 and may comprise a transmitter 454. The waveform-generating apparatus 450 may be configured to receive a machine learning model from the training apparatus 410, as indicated by arrow 456. The waveform-generating apparatus 450 may be configured to determine a waveform of the collective jamming signal 430, using the machine learning model. The waveform-generating apparatus 450 may be configured to transmit the waveform to the jamming apparatus 420, as indicated by arrow 458. The jamming apparatus 420 may then transmit the collective jamming signal 430 based on the waveform received from the waveform-generating apparatus. In such examples, the jamming apparatus 420 need not have the ability to determine the waveform of the collective jamming signal 430. Hence, the use of a waveform-generating apparatus 450 allows the jamming apparatus 420 to be implemented using a compact, low-power device that can be more easily installed within the target region.

In other examples, the system 400 may comprise a single apparatus that combines the functionality of the training apparatus and the jamming apparatus, such all of the methods described herein are performed at the single apparatus.

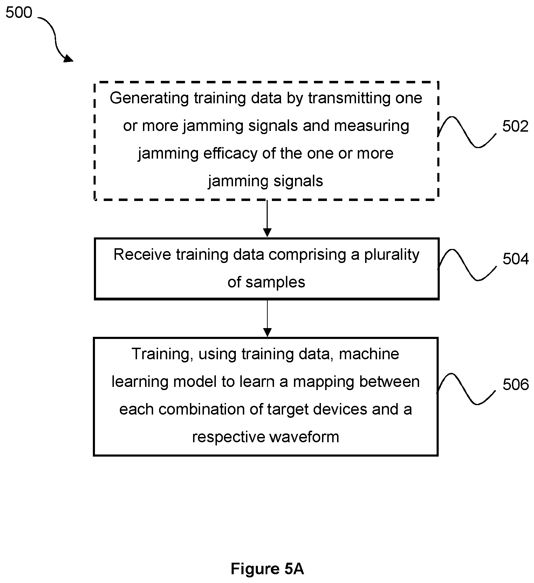

An example method 500 of training a machine learning model (for example, machine learning model 300) is shown in Figure 5A. The method 500 comprises receiving 504 training data (for example, training data 310) comprising a plurality of samples (for example, the plurality 314 of samples), each sample corresponding to a transmission of a respective jamming signal to a respective target device of a plurality of target devices (for example, the plurality 312 of target devices). Each sample may comprise a jamming efficacy (for example, *Jₙ* as described above) of the respective jamming signal and a value of each of one or more signal parameters (for example, ${p}_{i}^{k}$ as described above) that define a waveform of the respective jamming signal.

The method 500 further comprises training 506, using the training data, the machine learning model to learn a mapping between each combination of target devices from the plurality of target devices and a respective waveform. The waveform is effective, when transmitted in a collective jamming signal (for example, collective jamming signal 430), to jam all of the target devices in the respective combination of target devices.

The method 500 may, optionally, further comprise generating 502 the training data by, for each device in the plurality of target devices, transmitting one or more jamming signals each having a specified value of each of the one or more signal parameters and measuring the jamming efficacy of each of the one or more jamming signals. However, it will be appreciated that the method 500 may be performed without generating the training data, because the training data may simply be received from an external source, having already been generated.

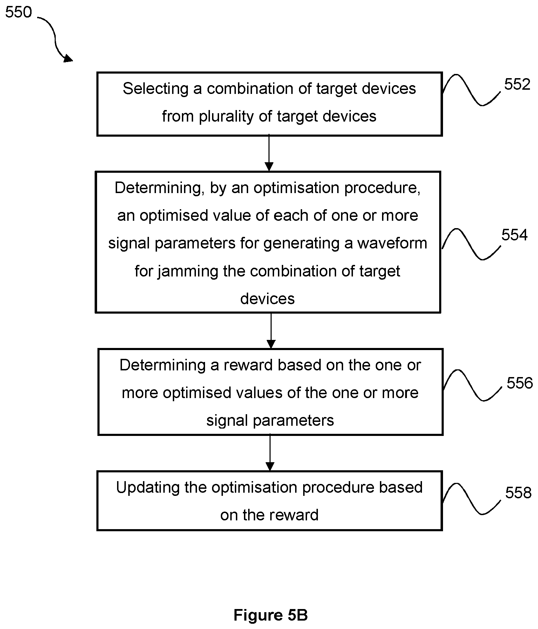

Figure 5B depicts an example implementation 550 of the training 506 of the machine learning model (for example, machine learning model 300) in Figure 5A. That is, training 506 the machine learning model may comprise any or all of operations 556 to 562 shown in Figure 5B.

Training 506 the machine learning model may comprise selecting 552 a combination of target devices from the plurality of target devices. Training 506 the machine learning model may further comprise determining 554, by an optimisation procedure (for example, a Monte Carlo Tree Search), an optimised value of each of the one or more signal parameters for generating a waveform for jamming the combination of target devices. Training 506 the machine learning model may further comprise determining 556, using a reward function, a reward associated with the one or more optimised values of the one or more signal parameters. Training 506 the machine learning model may further comprise updating 558 the optimisation procedure based on the reward.

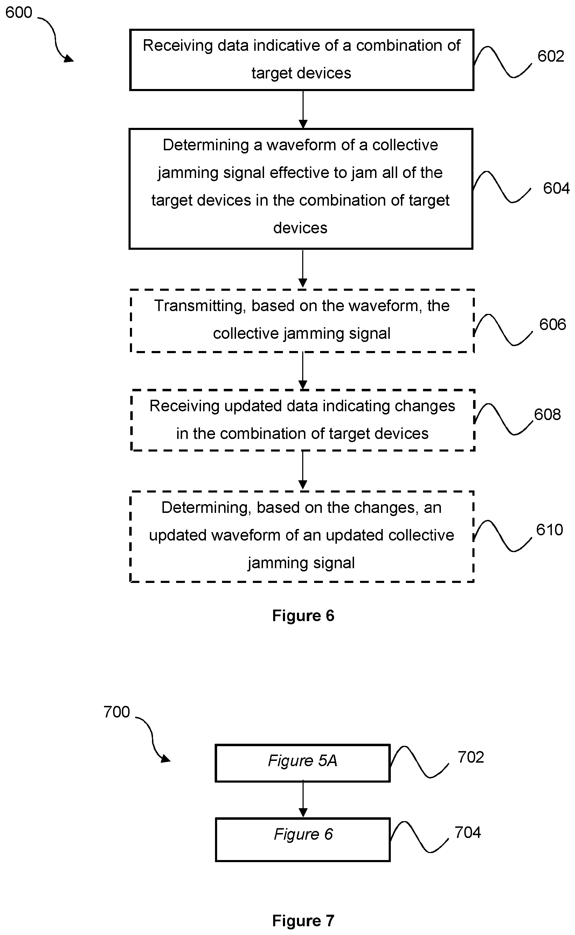

An example method 600 of determining a waveform of a signal is shown in Figure 6. The method 600 comprises receiving 602, into a machine learning model as described herein (for example, machine learning model 300), data indicative of a combination of target devices (for example, the combination of target devices 440). The method 600 further comprises determining 604, by the machine learning model and based on the combination of target devices, a waveform of a collective jamming signal (for example, collective jamming signal 430) effective to jam all of the target devices in the combination of target devices.

The method 600 may, optionally, further comprise transmitting 606, based on the waveform, the collective jamming signal. The collective jamming signal may be transmitted within or towards the target area 440, so as to jam a combination of target devices located in the target area 440. However, it will be appreciated that the collective jamming signal may not necessarily be transmitted as part of method 600, for example, if the waveform itself is transmitted to another apparatus for subsequent transmission of the collective jamming signal.

The method 600 may, optionally, further comprise receiving 608, in the machine learning model, updated data indicating a change in the combination of target devices. The method 600 may, optionally, further comprise determining 610, by the machine learning model and based on the change in the combination of target devices, an updated waveform of an updated collective jamming signal effective to jam all of the target devices in the changed combination of target devices. However, it will be appreciated that the method 600 need not comprise receiving 608 updated data. For example, the method 600 may simply result in a single waveform being determined for the combination of target devices. In such a case, the combination of target devices may not change (and thus there is no need to receive updated data) and/or the apparatus implementing the method may not be sensitive to changes in the combination of target devices (e.g. it may not be possible to determine whether such changes have occurred, or the changes may be deliberately ignored).

An example method 700 of training a machine learning model (for example, machine learning model 300) and determining a waveform of a signal is shown in Figure 7. The method 700 comprises performing 702 any or all of the method 500 shown in Figure 5A and/or any or all of the method 550 shown in Figure 5B. The method 700 further comprises, subsequently, performing 704 any or all of the method 600 shown in Figure 6. For example, method 700 may be performed by an apparatus that is configured to train a machine learning model, and use the machine learning model to generate a signal for jamming a combination of target devices.

## Claims

1. A method of training a machine learning model (300), the method comprising:
receiving (504) training data (310) comprising a plurality of samples (314), each sample corresponding to a transmission of a respective jamming signal to a respective target device of a plurality of target devices (312), and each sample comprising a jamming efficacy of the respective jamming signal and a value of each of one or more signal parameters that define a waveform of the respective jamming signal; and
training (506), using the training data, the machine learning model to learn a mapping between each combination (440) of target devices from the plurality of target devices and a respective waveform, whereby each waveform is effective, when transmitted in a collective jamming signal (430), to jam all of the target devices in the respective combination of target devices.

2. The method of claim 1, wherein the machine learning model learns a mapping between each combination of target devices and an output value of each of one or more signal parameters of the respective waveform.

3. The method of claim 1 or claim 2, wherein the machine learning model is trained to receive data indicative of a particular combination of target devices and to determine, based on the particular combination of target devices, a waveform of a collective jamming signal effective to jam all of the target devices in the particular combination of target devices.

4. The method of any of the preceding claims, wherein training the machine learning model comprises:
selecting a combination of target devices from the plurality of target devices;
determining, by an optimisation procedure, an optimised value of each of one or more signal parameters for generating a waveform for jamming the selected combination of target devices;
determining, using a reward function, a reward associated with the optimised values of the one or more signal parameters; and
updating the optimisation procedure based on the reward.

5. The method of claim 4, wherein determining the reward comprises determining a statistic representing a jamming efficacy of the waveform across the selected combination of target devices, and wherein the reward function is a function of the statistic representing the jamming efficacy.

6. The method of claim 5, wherein determining the statistic comprises determining:
a mean of the respective jamming-to-signal ratios of each target device in the combination of target devices;
a maximum jamming-to-signal ratio of the respective jamming-to-signal ratios of each target device in the combination of target devices; or
a standard deviation of the respective jamming-to-signal ratios of each target device in the combination of target devices.

7. The method of any of claims 4-6, wherein the reward function comprises a regularisation term that is a function of a duration of the waveform as a fraction of a maximum permitted duration of the waveform.

8. The method of any of the preceding claims, further comprising:
generating the training data by, for each device in the plurality of target devices,
transmitting one or more jamming signals each having a specified value of each of the one or more signal parameters, and
measuring the jamming efficacy of each of the one or more jamming signals.

9. A machine learning model (426) trained in accordance with the method of any of the preceding claims.

10. A method of determining a waveform of a signal, the method comprising:
receiving (602), by a machine learning model (426) in accordance with claim 9, data indicative of a combination (440) of target devices; and
determining (604), by the machine learning model and based on the combination of target devices, a waveform of a collective jamming signal (430) effective to jam all of the target devices in the combination of target devices.

11. The method of claim 10, wherein determining the waveform comprises determining an output value of each of one or more signal parameters of the waveform.

12. The method of claim 10 or claim 11, wherein the data indicative of a combination of target devices comprises data indicating the presence of the combination of target devices in a target area.

13. The method of any of claims 10 to 12, further comprising transmitting, based on the waveform, the collective jamming signal.

14. The method of any of claims 10 to 13, further comprising:
receiving, by the machine learning model, updated data indicating a change in the combination of target devices; and
determining, by the machine learning model and based on the change in the combination of target devices, an updated waveform of an updated collective jamming signal effective to jam all of the target devices in the changed combination of target devices.

15. The method of any of claims 10 to 14, wherein the output values are determined to minimise a statistic relating to a jamming-to-signal ratio of the collective jamming signal.

16. The method of claim 15, wherein the statistic is defined as:
a mean of the respective jamming-to-signal ratios of each target device in the combination of target devices;
a maximum jamming-to-signal ratio of the respective jamming-to-signal ratios of each target device in the combination of target devices; or
a standard deviation of the respective jamming-to-signal ratios of each target device in the combination of target devices.

17. The method of any of the preceding claims, wherein the one or more signal parameters comprise a respective dwell time for each respective target device, the respective dwell time indicating a duration for which the collective jamming signal targets the respective target device and/or a respective revisit time for each respective target device, the respective revisit time indicating a duration for which the collective jamming signal targets other target devices in the combination of target devices before returning to the respective target device and/or one or more signal parameters that define a period of sweeping, in which a jamming signal begins at a first frequency and increases or decreases to a second frequency and/or one or more signal parameters that define a period of constant-frequency transmission, in which a jamming signal remains at a constant frequency for a predetermined duration.

18. The method of any of the preceding claims, wherein the jamming efficacy comprises a jamming-to-signal ratio equal to, for a given target device, the ratio of the power of the respective jamming signal required to jam the transmission of and/or the reception of a signal by the given target device to the power of the signal transmitted or received by the given target device.

## Patentansprüche

1. Verfahren zum Trainieren eines maschinellen Lernmodells (300), das Verfahren umfassend:
Empfangen (504) von Trainingsdaten (310), die eine Vielzahl von Proben (314) umfassen, wobei jede Probe einer Übertragung eines jeweiligen Störsignals an eine jeweilige Zielvorrichtung einer Vielzahl von Zielvorrichtungen (312) entspricht und jede Probe eine Störwirksamkeit des jeweiligen Störsignals und einen Wert jedes von einem oder mehreren Signalparametern umfasst, die eine Wellenform des jeweiligen Störsignals definieren; und
Trainieren (506) des maschinellen Lernmodells unter Verwendung der Trainingsdaten, um eine Zuordnung zwischen jeder Kombination (440) von Zielvorrichtungen aus der Vielzahl von Zielvorrichtungen und einer jeweiligen Wellenform zu erlernen, wodurch jede Wellenform wirksam ist, wenn sie in einem kollektiven Störsignal (430) übertragen wird, um alle Zielvorrichtungen in der jeweiligen Kombination von Zielvorrichtungen zu stören.

2. Verfahren nach Anspruch 1, wobei das maschinelle Lernmodell eine Zuordnung zwischen jeder Kombination von Zielvorrichtungen und einem Ausgabewert jedes von einem oder mehreren Signalparametern der jeweiligen Wellenform erlernt.

3. Verfahren nach Anspruch 1 oder Anspruch 2, wobei das maschinelle Lernmodell so trainiert wird, dass es Daten empfängt, die auf eine bestimmte Kombination von Zielvorrichtungen hinweisen, und basierend auf der bestimmten Kombination von Zielvorrichtungen eine Wellenform eines kollektiven Störsignals bestimmt, das wirksam ist, um alle Zielvorrichtungen in der bestimmten Kombination von Zielvorrichtungen zu stören.

4. Verfahren nach einem der vorstehenden Ansprüche, wobei das Trainieren des maschinellen Lernmodells umfasst:
Auswählen einer Kombination von Zielvorrichtungen aus der Vielzahl von Zielvorrichtungen;
Bestimmen, durch ein Optimierungsprozedere, eines optimierten Wertes von jedem von einem oder mehreren Signalparametern zum Erzeugen einer Wellenform zum Stören der ausgewählten Kombination von Zielvorrichtungen;
Bestimmen, unter Verwendung einer Belohnungsfunktion, einer Belohnung, die mit den optimierten Werten des einen oder der mehreren Signalparameter verknüpft ist; und
Aktualisieren des Optimierungsprozederes basierend auf der Belohnung.

5. Verfahren nach Anspruch 4, wobei das Bestimmen der Belohnung das Bestimmen einer Statistik umfasst, die eine Störwirksamkeit der Wellenform über die ausgewählte Kombination von Zielvorrichtungen repräsentiert, und wobei die Belohnungsfunktion eine Funktion der Statistik ist, welche die Störwirksamkeit repräsentiert.

6. Verfahren nach Anspruch 5, wobei das Bestimmen der Statistik das Bestimmen umfasst von:
einem Mittelwert der jeweiligen Störungs-zu-Signal-Verhältnisse jeder Zielvorrichtung in der Kombination von Zielvorrichtungen;
einem maximalen Störungs-zu-Signal-Verhältnis der jeweiligen Störungs-zu-Signal-Verhältnissen jeder Zielvorrichtung in der Kombination von Zielvorrichtungen; oder
einer Standardabweichung der jeweiligen Störungs-zu-Signal-Verhältnisse jeder Zielvorrichtung in der Kombination von Zielvorrichtungen.

7. Verfahren nach einem der Ansprüche 4 bis 6, wobei die Belohnungsfunktion einen Regularisierungsterm umfasst, der eine Funktion einer Dauer der Wellenform als Bruchteil einer maximal zulässigen Dauer der Wellenform ist.

8. Verfahren nach einem der vorstehenden Ansprüche, ferner umfassend:
Erzeugen der Trainingsdaten durch, für jede Vorrichtung in der Vielzahl von Zielvorrichtungen,
Übertragen eines oder mehrerer Störsignale, die jeweils einen bestimmten Wert jedes der einen oder mehreren Signalparameter aufweisen, und
Messen der Störwirksamkeit jedes der einen oder mehreren Störsignale.

9. Maschinelles Lernmodell (426), das nach dem Verfahren eines der vorstehenden Ansprüche trainiert wurde.

10. Verfahren zum Bestimmen einer Wellenform eines Signals, das Verfahren umfassend:
Empfangen (602), durch ein maschinelles Lernmodell (426) nach Anspruch 9, von Daten, die auf eine Kombination (440) von Zielvorrichtungen hinweisen; und
Bestimmen (604), durch das maschinelle Lernmodell und basierend auf der Kombination von Zielvorrichtungen, einer Wellenform eines kollektiven Störsignals (430), das wirksam ist, um alle Zielvorrichtungen in der Kombination von Zielvorrichtungen zu stören.

11. Verfahren nach Anspruch 10, wobei das Bestimmen der Wellenform das Bestimmen eines Ausgabewerts von jedem von einem oder mehreren Signalparametern der Wellenform umfasst.

12. Verfahren nach Anspruch 10 oder Anspruch 11, wobei die Daten, die auf eine Kombination von Zielvorrichtungen hinweisen, Daten umfassen, die das Vorhandensein der Kombination von Zielvorrichtungen in einem Zielbereich anzeigen.

13. Verfahren nach einem der Ansprüche 10 bis 12, ferner umfassend das Übertragen, basierend auf der Wellenform, des kollektiven Störsignals.

14. System nach einem der Ansprüche 10 bis 13, ferner umfassend:
Empfangen, durch das maschinelle Lernmodell, von aktualisierten Daten, die eine Änderung in der Kombination von Zielvorrichtungen anzeigen; und
Bestimmen, durch das maschinelle Lernmodell und basierend auf der Änderung in der Kombination von Zielvorrichtungen, einer aktualisierten Wellenform eines aktualisierten kollektiven Störsignals, das wirksam ist, um alle Zielvorrichtungen in der geänderten Kombination von Zielvorrichtungen zu stören.

15. Verfahren nach einem der Ansprüche 10 bis 14, wobei die Ausgabewerte bestimmt werden, um eine Statistik zu minimieren, die sich auf ein Störungs-zu-Signal-Verhältnis des kollektiven Störsignals bezieht.

16. Verfahren nach Anspruch 15, wobei die Statistik definiert ist als:
ein Mittelwert der jeweiligen Störungs-zu-Signal-Verhältnisse jeder Zielvorrichtung in der Kombination von Zielvorrichtungen;
ein maximales Störungs-zu-Signal-Verhältnis der jeweiligen Störungs-zu-Signal-Verhältnisse jeder Zielvorrichtung in der Kombination von Zielvorrichtungen; oder
eine Standardabweichung der jeweiligen Störungs-zu-Signal-Verhältnisse jeder Zielvorrichtung in der Kombination von Zielvorrichtungen.

17. Verfahren nach einem der vorstehenden Ansprüche, wobei der eine oder die mehreren Signalparameter eine jeweilige Verweilzeit für jede jeweilige Zielvorrichtung umfassen, wobei die jeweilige Verweilzeit eine Dauer, während der das kollektive Störsignal auf die jeweilige Zielvorrichtung abzielt, und/oder eine jeweilige Wiederbesuchszeit für jede jeweilige Zielvorrichtung anzeigt, wobei die jeweilige Wiederbesuchszeit eine Dauer, für die das kollektive Störsignal auf andere Zielvorrichtungen in der Kombination von Zielvorrichtungen abzielt, bevor es zu der jeweiligen Zielvorrichtung zurückkehrt, und/oder einen oder mehrere Signalparameter, die eine Periode des Durchlaufens definieren, in der ein Störsignal mit einer ersten Frequenz beginnt und auf eine zweite Frequenz ansteigt oder abfällt, und/oder einen oder mehrere Signalparameter, die eine Periode der Übertragung mit konstanter Frequenz definieren, in der ein Störsignal für eine vorbestimmte Dauer bei einer konstanten Frequenz bleibt, anzeigt.

18. Verfahren nach einem der vorstehenden Ansprüche, wobei die Störwirksamkeit ein Störungs-Signal-Verhältnis umfasst, das für eine gegebene Zielvorrichtung dem Verhältnis zwischen der Leistung des jeweiligen Störsignals, die erforderlich ist, um die Übertragung und/oder den Empfang eines Signals durch die gegebene Zielvorrichtung zu stören, und der Leistung des von der gegebenen Zielvorrichtung übertragenen oder empfangenen Signals entspricht.

## Revendications

1. Procédé d'entraînement d'un modèle d'apprentissage automatique (300), le procédé comprenant :
la réception (504) de données d'entraînement (310) comprenant une pluralité d'échantillons (314), chaque échantillon correspondant à une transmission d'un signal de brouillage respectif à un dispositif cible respectif d'une pluralité de dispositifs cibles (312), et chaque échantillon comprenant une efficacité de brouillage du signal de brouillage respectif et une valeur de chacun parmi un ou plusieurs paramètres de signal qui définissent une forme d'onde du signal de brouillage respectif ; et
l'entraînement (506), à l'aide des données d'entraînement, du modèle d'apprentissage automatique pour apprendre une correspondance entre chaque combinaison (440) de dispositifs cibles provenant de la pluralité de dispositifs cibles et une forme d'onde respective, moyennant quoi chaque forme d'onde est efficace, lorsqu'elle est transmise dans un signal de brouillage collectif (430), pour brouiller la totalité des dispositifs cibles dans la combinaison respective de dispositifs cibles.

2. Procédé selon la revendication 1, dans lequel le modèle d'apprentissage automatique apprend une correspondance entre chaque combinaison de dispositifs cibles et une valeur de sortie de chacun parmi un ou plusieurs paramètres de signal de la forme d'onde respective.

3. Procédé selon la revendication 1 ou la revendication 2, dans lequel le modèle d'apprentissage automatique est entraîné pour recevoir des données indiquant une combinaison particulière de dispositifs cibles et pour déterminer, en fonction de la combinaison particulière de dispositifs cibles, une forme d'onde d'un signal de brouillage collectif efficace pour brouiller la totalité des dispositifs cibles dans la combinaison particulière de dispositifs cibles.

4. Procédé selon l'une quelconque des revendications précédentes, dans lequel l'entraînement du modèle d'apprentissage automatique comprend :
la sélection d'une combinaison de dispositifs cibles parmi la pluralité de dispositifs cibles ;
la détermination, par une procédure d'optimisation, d'une valeur optimisée de chacun parmi un ou plusieurs paramètres de signal permettant de générer une forme d'onde pour le brouillage de la combinaison sélectionnée de dispositifs cibles ;
la détermination, à l'aide d'une fonction de récompense, d'une récompense associée aux valeurs optimisées du ou des paramètres de signal ; et
la mise à jour de la procédure d'optimisation en fonction de la récompense.

5. Procédé selon la revendication 4, dans lequel la détermination de la récompense comprend la détermination d'une statistique représentant une efficacité de brouillage de la forme d'onde à travers la combinaison sélectionnée de dispositifs cibles, et dans lequel la fonction de récompense est une fonction de la statistique représentant l'efficacité de brouillage.

6. Procédé selon la revendication 5, dans lequel la détermination de la statistique comprend le fait de déterminer :
une moyenne des rapports brouillage-signal respectifs de chaque dispositif cible dans la combinaison de dispositifs cibles ;
un rapport brouillage-signal maximal des rapports brouillage-signal respectifs de chaque dispositif cible dans la combinaison de dispositifs cibles ; ou
un écart-type des rapports brouillage-signal respectifs de chaque dispositif cible dans la combinaison de dispositifs cibles.

7. Procédé selon l'une quelconque des revendications 4 à 6, dans lequel la fonction de récompense comprend un terme de régularisation qui est une fonction d'une durée de la forme d'onde en tant que fraction d'une durée permise maximale de la forme d'onde.

8. Procédé selon l'une quelconque des revendications précédentes, comprenant en outre :
la génération des données d'entraînement, pour chaque dispositif dans la pluralité de dispositifs cibles, par,
la transmission d'un ou plusieurs signaux de brouillage ayant chacun une valeur spécifiée de chacun parmi le ou les paramètres de signal, et
la mesure de l'efficacité de brouillage de chacun parmi le ou les signaux de brouillage.

9. Modèle d'apprentissage automatique (426) entraîné conformément au procédé selon l'une quelconque des revendications précédentes.

10. Procédé de détermination d'une forme d'onde d'un signal, le procédé comprenant :
la réception (602), par un modèle d'apprentissage automatique (426) selon la revendication 9, de données indiquant une combinaison (440) de dispositifs cibles ; et
la détermination (604), par le modèle d'apprentissage automatique et en fonction de la combinaison de dispositifs cibles, d'une forme d'onde d'un signal de brouillage collectif (430) efficace pour brouiller la totalité des dispositifs cibles dans la combinaison de dispositifs cibles.

11. Procédé selon la revendication 10, dans lequel la détermination de la forme d'onde comprend la détermination d'une valeur de sortie de chacun parmi un ou plusieurs paramètres de signal de la forme d'onde.

12. Procédé selon la revendication 10 ou la revendication 11, dans lequel les données indiquant une combinaison de dispositifs cibles comprennent des données indiquant la présence de la combinaison de dispositifs cibles dans une zone cible.

13. Procédé selon l'une quelconque des revendications 10 à 12, comprenant en outre la transmission, en fonction de la forme d'onde, du signal de brouillage collectif.

14. Procédé selon l'une quelconque des revendications 10 à 13, comprenant en outre :
la réception, par le modèle d'apprentissage automatique, de données mises à jour indiquant un changement dans la combinaison de dispositifs cibles ; et
la détermination, par le modèle d'apprentissage automatique et en fonction du changement dans la combinaison de dispositifs cibles, d'une forme d'onde mise à jour d'un signal de brouillage collectif mis à jour efficace pour brouiller la totalité des dispositifs cibles dans la combinaison changée de dispositifs cibles.

15. Procédé selon l'une quelconque des revendications 10 à 14, dans lequel les valeurs de sortie sont déterminées pour minimiser une statistique se rapportant à un rapport brouillage-signal du signal de brouillage collectif.

16. Procédé selon la revendication 15, dans lequel la statistique est définie en tant que :
une moyenne des rapports brouillage-signal respectifs de chaque dispositif cible dans la combinaison de dispositifs cibles ;
un rapport brouillage-signal maximal des rapports brouillage-signal respectifs de chaque dispositif cible dans la combinaison de dispositifs cibles ; ou
un écart-type des rapports brouillage-signal respectifs de chaque dispositif cible dans la combinaison de dispositifs cibles.

17. Procédé selon l'une quelconque des revendications précédentes, dans lequel le ou les paramètres de signal comprennent un temps de maintien respectif pour chaque dispositif cible respectif, le temps de maintien respectif indiquant une durée pendant laquelle le signal de brouillage collectif cible le dispositif cible respectif et/ou une fréquence de passage respective pour chaque dispositif cible respectif, la fréquence de passage respective indiquant une durée pendant laquelle le signal de brouillage collectif cible d'autres dispositifs cibles dans la combinaison de dispositifs cibles avant de revenir au dispositif cible respectif et/ou un ou plusieurs paramètres de signal qui définissent une période de balayage, dans laquelle un signal de brouillage commence à une première fréquence et augmente ou diminue à une seconde fréquence et/ou un ou plusieurs paramètres de signal qui définissent une période de transmission à fréquence constante, dans laquelle un signal de brouillage demeure à une fréquence constante pendant une durée prédéterminée.

18. Procédé selon l'une quelconque des revendications précédentes, dans lequel l'efficacité de brouillage comprend un rapport brouillage-signal égal, pour un dispositif cible donné, au rapport de la puissance du signal de brouillage respectif, requise pour brouiller la transmission ou et/ou la réception d'un signal par le dispositif cible donné à la puissance du signal transmis ou reçu par le dispositif cible donné.
